# EUROPÄISCHE PATENTSCHRIFT

(11) **EP 3 064 370 B1**
(45) Veröffentlichungstag und Bekanntmachung des Hinweises auf die Patenterteilung: **23.06.2021**
(21) Anmeldenummer: 16158821.5
(22) Anmeldetag: 04.03.2016
(51) Int. Cl.: B60B 1/00, B60B 1/02, B60B 1/04

(54) **LAUFRAD UND SPEICHE, INSBESONDERE FÜR EIN FAHRRAD**
IMPELLER AND SPOKE, IN PARTICULAR FOR A BICYCLE
ROUE PORTEUSE ET RAYON DE ROUE, EN PARTICULIER POUR UN VELO

(30) Priorität: 06.03.2015 DE 102015103327
(43) Veröffentlichungstag der Anmeldung: 07.09.2016
(73) Patentinhaber: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Patentanwälte Schütte & Engelen Partnerschaft mbB

(56) Entgegenhaltungen:
- EP-A1- 1 559 583
- DE-U1- 29 811 076
- US-A- 3 894 777
- US-A- 5 350 221
- US-A1- 2004 174 066

## Beschreibung

Die vorliegende Erfindung betrifft eine Speiche und ein mit wenigstens einer solchen Speiche ausgerüstetes Laufrad insbesondere für ein Fahrrad oder ein sonstiges wenigstens teilweise muskelbetriebenes Zweirad.

Bei Fahrzeugen generell und insbesondere auch bei wenigstens teilweise muskelbetriebenen Fahrzeugen spielt die Aerodynamik eine wichtige Rolle, da der Windwiderstand mit zunehmender Geschwindigkeit den größten Einfluss auf die zum Antrieb erforderliche Leistung hat. Zur Reduzierung des Windwiderstands eines Fahrrads sind deshalb geschlossene Laufräder bekannt geworden, die einen stark reduzierten Windwiderstand bieten. Derartige geschlossene Laufräder haben aber den Nachteil, dass dort bei Seitenwind ganz erhebliche Seitenwindkräfte einwirken, die das Steuern eines Zweirades erheblich erschweren können. Deshalb werden geschlossene Scheibenräder nicht regelmäßig für Straßenräder eingesetzt.

Bei Speichenrädern tragen die Speichen zu einem erheblichen Anteil zu dem Windwiderstand bei. Die standardmäßig rund ausgebildeten Speichen weisen nicht optimale Luftwiderstandswerte auf. Deshalb sind auch sogenannte Messerspeichen bekannt geworden, die einen in Laufrichtung flachen Querschnitt aufweisen und somit zur Verringerung des Windwiderstandes beitragen. Beispielsweise zeigt die EP 1 559 583 A1 abgeflachte Speichen zur Reduzierung des Windwiderstands. Die US 2004/0174066 A1 zeigt Doppeldickspeichen (butted spokes), welche mit abgeflachten Bereichen ausgestattet sind, um ein Werkzeug ansetzen zu können.

Nachteilig an solchen Messerspeichen ist aber, dass diese wiederum die Seitenwindempfindlichkeit erheblich vergrößern, sodass sich damit ausgerüstete Fahrräder unter Windeinfluss schlechter lenken lassen, sodass auch der Einsatz sogenannter Messerspeichen begrenzt ist.

Es ist deshalb die Aufgabe der vorliegenden Erfindung, ein mit Speichen ausgerüstetes Laufrad und eine insbesondere einfach herzustellende Speiche für ein solches Laufrad zur Verfügung zu stellen, womit eine Reduzierung des Windwiderstandes ermöglicht wird, wobei gleichzeitig die Seitenwindempfindlichkeit berücksichtigt wird.

Diese Aufgabe wird gelöst durch ein Laufrad mit den Merkmalen des Anspruchs 14 und durch eine Speiche mit den Merkmalen des Anspruchs 1 gelöst. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels.

Ein erfindungsgemäßes Laufrad ist für den Einsatz an einem wenigstens teilweise muskelbetriebenen Fahrrad vorgesehen und weist eine Nabe und eine Felge auf. Die Nabe ist mit der Felge über eine Vielzahl von Speichen verbunden. Dabei weist wenigstens eine der Speichen einen Speichenkörper mit zwei voneinander entfernten Enden auf.

Das erste bzw. nabenseitige Ende ist mit der Nabe verbunden und das zweite bzw. felgenseitige Ende ist mit der Felge verbunden. Der Speichenkörper ist langgestreckt ausgebildet und weist wenigstens einen Längsbereich in einer Längsrichtung des Speichenkörpers mit einem in einer Längsebene aufgenommenen abgeflachten Querschnitt auf.

Dabei weist der Speichenkörper in einem ersten Endabschnitt an dem ersten bzw. nabenseitigen Ende quer zu der Längsebene eine erste Endabschnittdicke auf.

Der Speichenkörper weist in einem zweiten Endabschnitt an dem zweiten bzw. felgenseitigen Ende quer zu der Längsebene eine zweite Endabschnittdicke auf.

Der Speichenkörper weist in einem näher an dem ersten Endabschnitt als an dem zweiten Endabschnitt angeordneten ersten Mittelbereich quer zu der Längsebene eine erste Mittelbereichdicke auf, die kleiner als die erste Endabschnittdicke ist.

Der Speichenkörper weist in einem näher an dem zweiten Endabschnitt als an dem ersten Endabschnitt angeordneten zweiten Mittelbereich den abgeflachten Querschnitt auf, der eine zweite Mittelbereichdicke quer zu der Längsebene aufweist, die kleiner als die erste Mittelbereichdicke ist.

Das erfindungsgemäße Laufrad hat viele Vorteile, da das Laufrad einen deutlich reduzierten Windwiderstand ermöglicht, wobei gleichzeitig die Seitenwindempfindlichkeit gegenüber einem konventionellen Laufrad mit durchgängig gleicher Speichendicke nicht erhöht wird. Die Herstellung ist einfach und kostengünstig.

Erfindungsgemäß ist das erste bzw. nabenseitige Ende des Speichenkörpers dafür vorgesehen, mit der Nabe verbunden zu werden und das zweite bzw. felgenseitige Ende des Speichenkörpers ist dafür vorgesehen, mit der Felge verbunden zu werden.

Das "nabenseitige Ende" kann auch als "erstes Ende" oder als "erstes nabenseitiges Ende" oder als "nabenseitiges erstes Ende" bezeichnet werden und bezeichnet jeweils das der Nabe zugewendete und dort befestigte Ende des Speichenkörpers.

Das "felgenseitige Ende" kann auch als "zweites Ende" oder als "zweites felgenseitiges Ende" oder als "felgenseitiges zweites Ende" bezeichnet werden und bezeichnet jeweils das der Felge zugewendete und dort befestigte Ende des Speichenkörpers.

Dabei befindet sich der zweite Mittelbereich mit dem abgeflachten Querschnitt radial weiter außen als der erste Mittelbereich. Dadurch liegt der abgeflachte Querschnitt des zweiten Mittelbereichs radial weiter außen und wird somit größeren Umfangsgeschwindigkeiten ausgesetzt als der erste Mittelbereich mit einem vorzugsweise runden oder im Wesentlichen runden Querschnitt.

Bei der Fahrt mit einem Fahrrad rollt das mit einer solchen Speiche ausgerüstete Laufrad auf dem Boden oder der Straße ab. Dabei liegt am untersten Punkt des Laufrades eine Relativgeschwindigkeit von 0 zu der umgebenden Luft bzw. dem Boden vor. Am obersten Punkt des Laufrades bzw. am obersten Punkt der obersten Speiche liegt hingegen im Wesentlichen die doppelte Relativgeschwindigkeit der tatsächlichen Fahrgeschwindigkeit relativ zu der umgebenden Luft vor. Durch eine abgeflachte Ausgestaltung des Querschnitts in dem weiter außen liegenden zweiten Mittelbereich wird folglich der einer besonders hohen Umfangs- und Relativgeschwindigkeit ausgesetzte äußere zweite Mittelbereich strömungsgünstiger als im Stand der Technik geformt, sodass dort ein deutlich verringerter Luftwiderstand erzielbar ist.

Gleichzeitig wird in dem zentralen Bereich des Laufrades, also in dem ersten Mittelbereich, der näher an der Nabe angeordnet ist und der sogar noch im Durchmesser reduziert ist, eine Verringerung der Seitenwindempfindlichkeit erzielt. Insgesamt wird dadurch die Seitenwindempfindlichkeit eines damit ausgerüsteten Laufrades gegenüber einem konventionellen Laufrad mit durchgängig gleich dicken Speichen verringert und der Luftwiderstand ganz erheblich reduziert.

Bei dem erfindungsgemäßen Laufrad ist die Nabe jeweils mit dem nabenseitigen Ende einer Mehrzahl der Speichen verbunden und die Felge ist jeweils mit dem felgenseitigen Ende der Mehrzahl der Speichen verbunden. Das ist sehr vorteilhaft, da der abgeflachte Querschnitt in dem zweiten Mittelbereich radial weiter außen angeordnet ist als der erste Mittelbereich mit einem vorzugsweise im Wesentlichen runden Querschnitt. Der Luftwiderstand wächst quadratisch mit der Relativgeschwindigkeit zwischen Speiche und Luft. Durch die abgeflachte Ausgestaltung des Querschnitts der Speichen in dem weiter außen liegenden zweiten Mittelbereich wird folglich der Luftwiderstand insgesamt besonders vorteilhaft reduziert. Ein Laufrad mit Speichen, die in dem ersten Mittelbereich einen z. B. rund ausgebildeten Querschnitt mit kleinerer Mittelbereichdicke im Vergleich zur ersten Endabschnittdicke aufweisen, ist vorteilhaft. Ein so ausgerüstetes Rad ist nämlich dort aerodynamisch, wo es erforderlich ist und es hat dort eine kleine Angriffsfläche für Seitenwind, wo die Aerodynamik in Fahrtrichtung weniger kritisch ist.

Die im Vergleich zu wenigstens einem Endabschnitt reduzierten Dicken bzw. Querschnitte des ersten Mittelbereichs (erste Mittelbereichdicke) und des zweite Mittelbereichs (zweite Mittelbereichdicke) führen zu einem geringeren Gesamtgewicht der Speichen und des Laufrades.

In allen Ausgestaltungen ist es besonders bevorzugt, dass der abgeflachte Querschnitt der Speichenkörper jeweils im Wesentlichen parallel zu einer durch die Felge aufgespannten Ebene ausgerichtet ist. Im Wesentlichen parallel im Sinne der vorliegenden Erfindung ist auch eine gewisse Schrägstellung von z. B. vorzugsweise bis zu 10° oder insbesondere bis zu 20° oder möglicherweise auch bis zu 30° zur Längsrichtung. Eine gewisse Schrägheit ist normal und oft gewünscht.

Jedenfalls wird sichergestellt, dass der zweite Mittelbereich mit dem abgeflachten Querschnitt (im Wesentlichen) in der Laufebene ausgerichtet ist und somit den Windwiderstand erniedrigt und nicht erhöht. Eine Erhöhung könnte auftreten, wenn der abgeflachte Bereich vollständig oder im Wesentlichen quer zu der Fortbewegungsrichtung eines mit einem solchen Laufrad ausgerüsteten Fahrrads ausgerichtet wäre.

Eine erfindungsgemäße Speiche weist einen Speichenkörper auf und ist für den Einsatz an einem Laufrad eines wenigstens teilweise muskelbetriebenen Fahrrads vorgesehen. Insbesondere sind die Speiche und deren nachfolgend beschriebene Weiterbildungen für das zuvor beschriebene Laufrad vorgesehen. Der Speichenkörper weist zwei voneinander entfernte Enden auf, wobei ein erstes nabenseitiges Ende dafür vorgesehen ist, mit einer Nabe verbunden zu werden. Das zweite felgenseitige Ende ist dafür vorgesehen, mit einer Felge verbunden zu werden.

Der Speichenkörper ist langgestreckt ausgebildet und weist über wenigstens einen Längsbereich in einer Längsrichtung des Speichenkörpers wenigstens einen wenigstens im Wesentlichen in einer Längsebene aufgenommenen abgeflachten Querschnitt auf.

Dabei weist der Speichenkörper in einem ersten Endabschnitt an dem ersten nabenseitigen Ende quer zu der Längsebene eine erste Endabschnittdicke auf.

Der Speichenkörper weist in einem zweiten Endabschnitt an dem zweiten felgenseitigen Ende quer zu der Längsebene eine zweite Endabschnittdicke auf.

Der Speichenkörper weist in einem näher an dem ersten Endabschnitt als an dem zweiten Endabschnitt angeordneten ersten Mittelbereich quer zu der Längsebene eine erste Mittelbereichdicke auf, die kleiner als die erste Endabschnittdicke ist.

Der Speichenkörper weist in einem näher an dem zweiten Endabschnitt als an dem ersten Endabschnitt angeordneten zweiten Mittelbereich den abgeflachten Querschnitt auf.

Der zweite Mittelbereich weist eine zweite Mittelbereichdicke quer zu der Längsebene auf, die kleiner als die erste Mittelbereichdicke ist. Vorzugsweise ist der abgeflachte Querschnitt in der Längsebene angeordnet.

Die erfindungsgemäße Speiche hat auch viele Vorteile. Ein erheblicher Vorteil der erfindungsgemäßen Speiche besteht darin, dass der Speichenkörper in dem ersten Mittelbereich eine erste Mittelbereichdicke aufweist, die kleiner ist als die erste Endabschnittdicke. Dadurch wird in dem ersten Mittelbereich der Windwiderstand reduziert.

Ein weiterer Vorteil liegt darin, dass der Speichenkörper in dem zweiten Mittelbereich den abgeflachten Querschnitt aufweist, der eine zweite Mittelbereichdicke quer zu der Längsebene aufweist, die sogar noch kleiner als die erste Mittelbereichdicke ist. Dadurch liegen mehrere abgestufte Dickenbereiche vor und in dem Bereich des abgeflachten Querschnitts ist die zweite Mittelbereichdicke geringer als in dem ersten Mittelbereich und auch kleiner als die erste Endabschnittdicke.

Der abgeflachte Querschnitt kann vollständig innerhalb der oder parallel zu der Längsebene ausgerichtet sein. Es ist aber auch möglich, dass der abgeflachte Querschnitt des Speichenkörpers in dem ersten Mittelbereich sich nicht vollständig innerhalb der Längsebene oder parallel zu der Längsebene erstreckt, beispielsweise, wenn der erste Mittelbereich eine leichte Krümmung aufweist oder ganz leicht schraubenförmig ausgebildet ist. Dabei erstreckt sich in allen Fällen der abgeflachte Bereich nicht quer zu der Längsebene, sondern maximal innerhalb eines Bereichs von +/- 30° und insbesondere +/-20° und vorzugsweise +/-10° relativ zu der Längsebene. Besonders bevorzugt ist wenigstens eine Längskante des abgeflachten Querschnitts im Rahmen der Fertigungsgenauigkeit des Speichenkörpers parallel zu Längsebene.

Dadurch, dass der Speichenkörper nicht über seiner vollständigen Länge mit einem abgeflachten Querschnitt versehen ist, sondern nur in dem zweiten Mittelbereich, wird ein mit solchen Speichen ausgerüstetes Laufrad nur einer - wenn überhaupt - geringfügig größeren Seitenwindbelastung ausgesetzt. Gleichzeitig wird der Windwiderstand in Fahrtrichtung erheblich verringert, sodass einerseits hohe Geschwindigkeiten mit einem solchen Zweirad bzw. Fahrrad ermöglicht werden, während gleichzeitig die Fahrsicherheit auch bei windigen oder böigen Windverhältnissen erhalten bleibt.

Der Speichenkörper weist hier zwei voneinander entfernte Enden auf, nämlich ein erstes Ende und ein zweites Ende. Das erste Ende ist im Sinne der Erfindung das nabenseitige Ende und kann auch als "erstes Ende", "nabenseitiges Ende", "erstes nabenseitiges Ende" und als "nabenseitiges erstes Ende" bezeichnet werden. Die Bezeichnungen sind austauschbar. Das zweite Ende ist im Sinne der Erfindung das felgenseitige Ende und kann auch als "zweites Ende", "felgenseitiges Ende", "zweites felgenseitiges Ende" und "felgenseitiges zweites Ende" bezeichnet werden. Auch diese Bezeichnungen sind bei der Definition der Erfindung austauschbar.

In einer bevorzugten Weiterbildung des Laufrades oder der Speiche weist der Speichenkörper über wenigstens einen Längsabschnitt einen konstanten Querschnitt auf. Dabei ist der Längsabschnitt einer Gruppe von Längsabschnitten entnommen, welche den ersten Endabschnitt und den zweiten Endabschnitt und den ersten Mittelbereich und den zweiten Mittelbereich umfasst.

Unter einem konstanten Querschnitt wird hier im Sinne der vorliegenden Erfindung ein im Wesentlichen konstanter Querschnitt verstanden. Das bedeutet, dass kleine Querschnittsänderungen von zum Beispiel kleiner 10 % und insbesondere kleiner 5 % über der Länge des Längsabschnitts unberücksichtigt bleiben und immer noch als konstanter Querschnitt angesehen werden. Vorzugsweise liegen Querschnittsänderungen über der Länge des Längsabschnitts in einem Abmessungsbereich von kleiner 5 % und insbesondere kleiner 2 %.

In einer bevorzugten Weiterbildung weist der Speichenkörper zwischen wenigstens zwei Längsabschnitten einen kontinuierlichen und/oder abgestuften Übergangsbereich auf. Es ist auch möglich, dass zwei oder mehr gleichartige oder unterschiedlich ausgebildete Übergangsbereiche zwischen zwei benachbarten Längsabschnitten vorgesehen sind. Besonders bevorzugt werden aber zwei benachbarte Längsabschnitte oder Längsbereiche durch einen kontinuierlichen oder abgestuften Übergangsbereich miteinander verbunden. Wenigstens ein Übergangsbereich und vorzugsweise alle Übergangsbereiche sind vorzugsweise in der Längsrichtung des Speichenkörpers kurz ausgebildet. Vorzugsweise sind alle Übergangsbereiche kürzer als 20 mm und insbesondere kürzer als 15 mm.

Der Übergangsbereich zwischen dem ersten Mittelbereich und dem zweiten Mittelbereich erstreckt sich vorzugsweise über eine Länge von weniger als 15 mm und insbesondere weniger als 10 mm. Der Übergangsbereich zwischen dem ersten Mittelbereich und dem zweiten Mittelbereich ist vorzugsweise kürzer als 10% der Länge des ersten Mittelbereiches. Besonders bevorzugt liegt eine Länge des Übergangsbereichs zwischen dem ersten Mittelbereich und dem zweiten Mittelbereich bei 5% +/- 3% der Länge des ersten Mittelbereiches, kann aber auch noch kürzer sein.

Vorzugsweise ist die Länge wenigstens eines Übergangsbereichs und vorzugsweise aller Übergangsbereiche kleiner als eine Länge wenigstens eines und insbesondere des kürzesten Endabschnitts.

In vorteilhaften Ausgestaltungen ist auch ein gestufter oder kantiger Übergang zwischen den Endabschnitten und den Übergangsbereichen möglich.

In einer bevorzugten Weiterbildung weist der Speichenkörper quer zu seiner Längsrichtung und innerhalb der Längsebene in dem ersten Mittelbereich eine erste Mittelbereichbreite auf, die geringer als die zweite Mittelbereichbreite in dem zweiten Mittelbereich ist. Dadurch wird in Fahrtrichtung eines damit ausgerüsteten Fahrzeugs ein geringerer Luftwiderstand erzielt.

In allen Ausgestaltungen ist es bevorzugt, dass der abgeflachte Querschnitt in dem zweiten Mittelbereich durch eine Verprägung des zweiten Mittelbereichs erzielt wird. Die erfindungsgemäße Speiche ist einfach herzustellen.

Vorzugsweise ist die zweite Mittelbereichbreite größer als eine erste Endabschnittbreite in dem ersten Endabschnitt und oder die zweite Mittelbereichbreite ist größer als eine zweite Endabschnittbreite in dem zweiten Endabschnitt.

In bevorzugten Weiterbildungen weisen der erste Endabschnitt und der zweite Endabschnitt und der erste Mittelabschnitt gleichartig ausgebildete Querschnitte auf. Unter "gleichartig ausgebildeten Querschnitten" wird im Sinne der vorliegenden Erfindung verstanden, dass die Querschnittsformen von der Form gleich ausgebildet sind, während es aber möglich ist, dass die einzelnen Endabschnitte und der erste Mittelbereich unterschiedliche Querschnittsabmessungen aufweisen.

Besonders bevorzugt weisen der erste Endabschnitt und der zweite Endabschnitt gleiche Querschnitte auf. In besonders bevorzugten Ausgestaltungen sind die Querschnitte wenigstens des ersten Endbereichs und des zweiten Endbereichs jeweils rund und insbesondere im Wesentlichen rund ausgebildet. Besonders bevorzugt ist auch der Querschnitt in dem ersten Mittelbereich rund ausgebildet.

In besonders bevorzugten Ausgestaltungen wird die Speiche aus einem ursprünglich rund oder doch im Wesentlichen ausgebildeten Profil hergestellt, wobei die Mittelbereiche insbesondere durch einen Ziehvorgang oder lokales Hämmern und/oder einen Kaltschmiedevorgang und/oder einen anderen Bearbeitungsschritt oder Bearbeitungsvorgang verjüngt werden, sodass nach dem Ziehvorgang oder Bearbeitungsvorgang zwei Endabschnitte mit größeren Durchmessern und ein zum Beispiel homogener Mittelbereich mit einem verringerten Durchmesser vorliegt.

Anschließend wird ein Teil des homogenen Mittelbereichs verprägt, sodass dort der zweite Mittelbereich mit einem abgeflachten Querschnitt entsteht. Als Folge davon ergeben sich zwei Endabschnitte mit vorzugsweise gleichen Querschnitten und ein erster verjüngter Mittelbereich mit einem im Wesentlichen runden Querschnitt und ein zweiter verjüngter Mittelbereich, in dem ein abgeflachter Querschnitt vorliegt. Eine solche Herstellung ist einfach und sehr kostengünstig.

Es ist aber auch möglich, dass die Speiche nicht aus einem runden Ursprungsprofil, sondern aus einem ovalen, eckigen oder sonstigen Querschnittsprofil hergestellt wird.

Vorzugsweise weist der abgeflachte Querschnitt in dem zweiten Mittelbereich eine wenigstens etwa ovale und/oder (mehr-)eckige und/oder elliptische und/oder flügelformartige mit abgerundeten Ecken ausgebildete Querschnittsform auf.

In besonders bevorzugten Ausgestaltungen erstreckt sich der zweite Mittelbereich über eine Länge zwischen etwa 1/3 und etwa 2/3 einer Länge des Speichenkörpers. Möglich und bevorzugt ist es beispielsweise dass sich der zweite Mittelbereich über etwa 35-55 % der Länge des Speichenkörpers und besonders bevorzugt über zwischen etwa 45 % und 55 % der Länge des Speichenkörpers erstreckt. Bei derartigen Ausgestaltungen wird eine erhebliche Reduzierung des Windwiderstandes erreicht, während gleichzeitig die Seitenwindempfindlichkeit gar nicht oder nur sehr moderat erhöht wird oder sogar durch Abmessungsreduzierungen gesenkt werden kann.

In besonders bevorzugten Weiterbildungen weist der Speichenkörper an wenigstens einem der beiden Enden ein Außengewinde und/oder ein Befestigungsmittel mit einem Außengewinde auf, um den Speichenkörper mit der Felge und/oder der Nabe zu verbinden.

Vorzugsweise weist der Speichenkörper an wenigstens einem der beiden Enden einen Speichenkopf auf, um den Speichenkörper über den Speichenkopf mit der Nabe und/oder der Felge zu verbinden. Dabei kann der Speichenkopf rotationssymmetrisch, spiegelsymmetrisch oder punktsymmetrisch ausgebildet sein. Der Speichenkopf kann beispielsweise halbkugelförmig oder kugelförmig ausgebildet sein. Möglich ist auch eine T-förmige Ausgestaltung des Speichenkopfs.

Insbesondere ist der Speichenkopf T-förmig ausgebildet und/oder weist einen "T-Head" auf. Mit einem solchen T-förmigen Speichenkopf kann die Speiche an oder in der Nabe verdrehsicher aufgenommen werden. Das garantiert die passende und insbesondere optimale Ausrichtung der Speiche relativ zur Laufrichtung.

Vorzugsweise ist das Laufrad mit wenigstens einer Speiche ausgerüstet, wie zuvor beschrieben.

Insgesamt stellt die Erfindung eine vorteilhafte Speiche und ein vorteilhaftes Laufrad zur Verfügung, womit der Windwiderstand reduziert werden kann, während die Seitenwindempfindlichkeit verringert werden oder nicht oder nur geringfügig erhöht wird. Die Herstellung ist sehr einfach und kostengünstig.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Figur 1: eine schematische Seitenansicht eines Mountainbikes;
- Figur 2: eine schematische Seitenansicht eines Renn- bzw. Tourenrades;
- Figur 3: eine schematische Seitenansicht einer erfindungsgemäßen Speiche entlang der Längsebene;
- Figur 4: eine schematische Queransicht der Speiche aus Figur 3;
- Figur 5: eine schematische Darstellung einer Speiche in Längsrichtung;
- Figur 6: die Speiche aus Figur 5 in einer Seitenansicht; und
- Figur 7: schematisch einige Querschnitte der Speiche nach den Figuren 5 und 6.

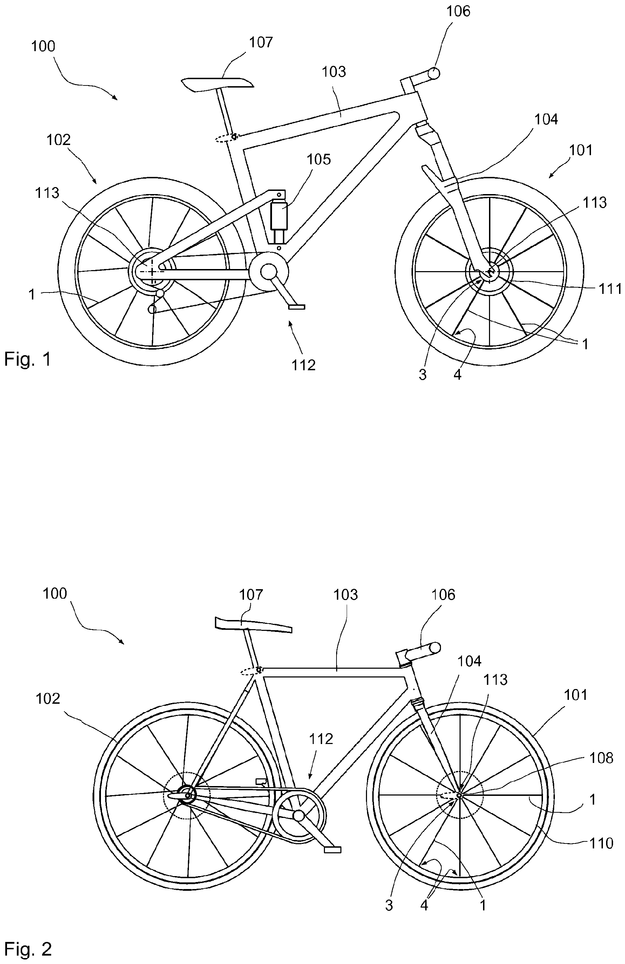

Figur 1 zeigt eine schematische Darstellung eines Mountainbikes als Fahrrad bzw. Zweirad 100. Das Fahrrad weist zwei Laufräder 101, 102 auf, nämlich ein Vorderrad 101 und ein Hinterrad 102.

Weiterhin sind ein Rahmen 103, eine Federgabel 104, ein Hinterraddämpfer 105, ein Lenker 106 und ein Sattel 107 vorgesehen. Als Antrieb 112 sind Pedale und hier eine Kettenschaltung vorgesehen. Das Vorderrad 101 und das Hinterrad 102 sind jeweils an Ausfallenden 113 an der Gabel 104 bzw. dem Rahmen 103 befestigt.

Figur 2 zeigt eine stark schematische Seitenansicht eines Rennrades oder Tourenrades als Zweirad 100, wobei das Fahrrad wiederum über ein erfindungsgemäßes Vorderrad 101 und ein erfindungsgemäßes Hinterrad 102 als Laufräder verfügt. Die Laufräder sind an den Ausfallenden 113 befestigt. Das Vorderrad und das Hinterrad 101, 102 weisen jeweils eine Felge 110 und erfindungsgemäße Speichen 1 auf. Die Speichen 1 sind aufgrund des Abbildungsmaßstabs nur schematisch dargestellt und werden mit Bezug auf die weiteren Figuren im Folgenden ausführlich erörtert.

Die Räder 101 und 102 in den Figuren 1 und 2 weisen jeweils eine Mehrzahl an Speichen 1 auf. Die Speichen 1 sind mit den ersten bzw. nabenseitigen Enden 3 mit der Nabe 108 und mit den zweiten bzw. felgenseitigen Enden 4 mit der Felge 110 verbunden.

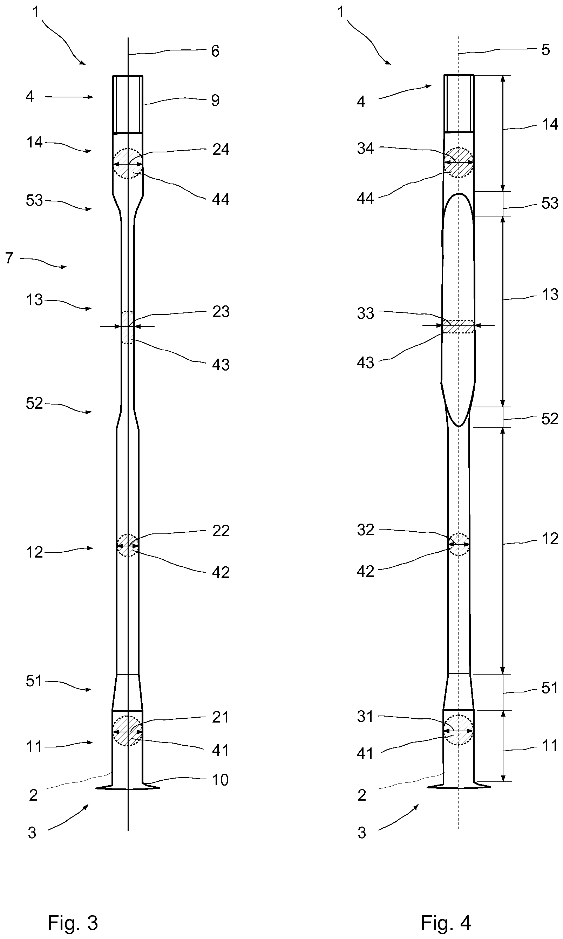

In Figuren 3 und 4 ist eine erfindungsgemäße Speiche 1 eines Laufrades 101 oder 102 in einer Längsansicht und in einer Seitenansicht dargestellt.

Figur 3 zeigt dabei eine schematische und insbesondere in Längsrichtung 5 nicht maßstäblich dargestellte Ansicht einer Speiche 1 in Fahrtrichtung. Quer zu der Darstellungsebene erstreckt sich die Längsebene 6, entlang derer ein mit einer solchen Speiche ausgerüstetes Fahrrad 100 bewegt wird.

Die Speiche 1 verfügt an dem nabenseitigen Ende 3 über einen Speichenkopf 10 und an dem felgenseitigen Ende 4 über ein Außengewinde 9, welches zur Verschraubung mit einem hier in Figur 3 nicht dargestellten Speichennippel dient.

Das erste bzw. nabenseitige Ende 3 des Speichenkörpers 2 wird an der Nabe 108 befestigt und der Speichenkörper 2 erstreckt sich von der Nabe 108 aus nach außen zu dem zweiten bzw. felgenseitigen Ende 4, wo das Außengewinde 9 dann mit einem Speichennippel (nicht dargestellt) an der Felge 110 befestigt wird.

Der Speichenkörper 2 verfügt hier über einen ersten Endabschnitt 11 benachbart zu dem ersten bzw. nabenseitigen Ende 3, einen ersten Mittelbereich 12, einen zweiten Mittelbereich 13 und einen zweiten Endabschnitt 14. Zwischen dem ersten Endabschnitt 11 und dem ersten Mittelbereich 12 ist ein Übergangsbereich 51 vorgesehen und zwischen dem ersten Mittelbereich 12 und dem zweiten Mittelbereich 13 ist ein Übergangsbereich 52 vorgesehen. Zwischen dem zweiten Mittelbereich 13 und dem zweiten Endabschnitt 14 ist ein Übergangsbereich 53 angeordnet.

Möglich ist es auch, die Speiche 1 mit anderen Befestigungsmitteln als Speichenköpfen und Gewinden an den Endabschnitten 11 und 14 auszurüsten oder die Speiche über andere geeignete Befestigungsmittel an der Nabe bzw. der Felge zu befestigen. Vorzugsweise weist die Speiche 1 aber einen Speichenkopf an dem nabenseitigen Ende und ein Außengewinde an dem felgenseitigen Ende auf.

Der erste Endabschnitt 11, der zweite Endabschnitt 14 und der erste Mittelbereich 12 weisen hier jeweils rund ausgebildete Querschnitte 41, 42 und 44 auf. Dabei sind die Querschnitte 41 und 44 hier vorzugsweise gleich ausgebildet. Das bedeutet, dass die erste Endabschnittdicke 21 in dem ersten Endabschnitt 11 im Wesentlichen mit der zweiten Endabschnittdicke 24 an dem zweiten Endabschnitt 14 übereinstimmt.

Im Vergleich dazu ist die erste Mittelbereichdicke 22 an dem ersten Mittelbereich 12 deutlich geringer. In einem konkreten Beispiel beträgt die erste Endabschnittdicke 21 hier 2,0 mm, sowie auch die zweite Endabschnittdicke 24 an dem zweiten Endabschnitt 14. Die erste Mittelbereichdicke 22 in dem ersten Mittelbereich 12 beträgt hingegen hier nur 1,5 mm.

In dem zweiten Mittelbereich 13, der näher zu dem zweiten Endabschnitt 14 angeordnet ist als der erste Mittelbereich 12 weist der zweite Mittelbereich 13 eine zweite Mittelbereichdicke 23 auf, die deutlich geringer ist als die erste Mittelbereichdicke 22 des ersten Mittelbereichs 12. Hier beträgt die zweite Mittelbereichdicke 23 nur etwa 0,9 mm und ist damit weniger als halb so dick wie die erste Endabschnittdicke 21 oder die zweite Endabschnittdicke 24, wodurch eine ganz erhebliche Windwiderstandsreduzierung erreicht wird.

Zusätzlich eingezeichnet sind in Figur 3 schraffiert die jeweiligen Querschnittsformen in den jeweiligen Abschnitten bzw. Bereichen. Klar erkennbar ist das in dem ersten Endabschnitt 11 ein im Wesentlichen rund ausgebildeter Querschnitt 41 vorliegt. Ebenso liegt in dem ersten Mittelbereich 12 ein im Wesentlichen rund ausgebildeter Querschnitt 42 vor. Auch der Querschnitt 44 in dem zweiten Endabschnitt 14 ist im Wesentlichen rund ausgebildet.

Im Unterschied dazu ist der Querschnitt 43 in dem zweiten Mittelbereich 13 abgeflacht ausgebildet, wie sich aus dem gestrichelt eingezeichneten Querschnitt 43 ergibt.

Figur 4 zeigt eine schematische Seitenansicht der Speiche 1 aus Figur 3, wobei sich aufgrund der rund ausgebildeten Endabschnitte 11 und 14 und des rund ausgebildeten ersten Mittelbereichs 12 dort eine im Wesentlichen gleiche Ansicht ergibt.

Erheblich unterschiedlich ist hingegen die Ansicht des zweiten Mittelbereichs 13, in dem der abgeflachte Querschnitt 43 des zweiten Mittelbereichs 13 von der Seite zu sehen ist. Während in dem ersten Endabschnitt 11 aufgrund der runden Ausgestaltungen die erste Endabschnittdicke 21 der ersten Endabschnittbreite 31 und in dem zweiten Endabschnitt 14 die zweite Endabschnittdicke 24 der zweiten Endabschnittbreite 34 und in dem ersten Mittelbereich 12 die erste Mittelbereichdicke 22 der ersten Mittelbereichbreite 32 entsprechen, so weicht die zweite Mittelbereichbreite 33 doch erheblich von der zweiten Mittelbereichdicke 23 ab. Die Mittelbereichbreite 33 beträgt im Ausführungsbeispiel etwa 2,3 mm und ist damit mehr als doppelt so groß wie die zweite Mittelbereichdicke 23 mit etwa 0,9 mm.

In den Übergangsbereichen 51, 52, 53 erfolgt ein gradueller Übergang zwischen den jeweiligen Abschnitten bzw. Bereichen.

Die Übergangsbereiche 51, 52 und 53 sind in der Längsrichtung 5 des Speichenkörpers 2 erheblich kürzer ausgebildet als die Mittelbereiche 12 und 13 und hier auch kürzer als die Endabschnitte 11 und 14. Der Übergangsbereich 52 misst hier eine Länge von zwischen etwa 5 mm und 10 mm. Die Übergangsbereiche 51 und 53 sind hier etwas länger ausgebildet als der Übergangsbereich 52. Eine axiale Länge der Übergangsbereiche 51 und 53 entlang des Speichenkörpers 2 beträgt vorzugsweise zwischen 5 mm und 15 mm.

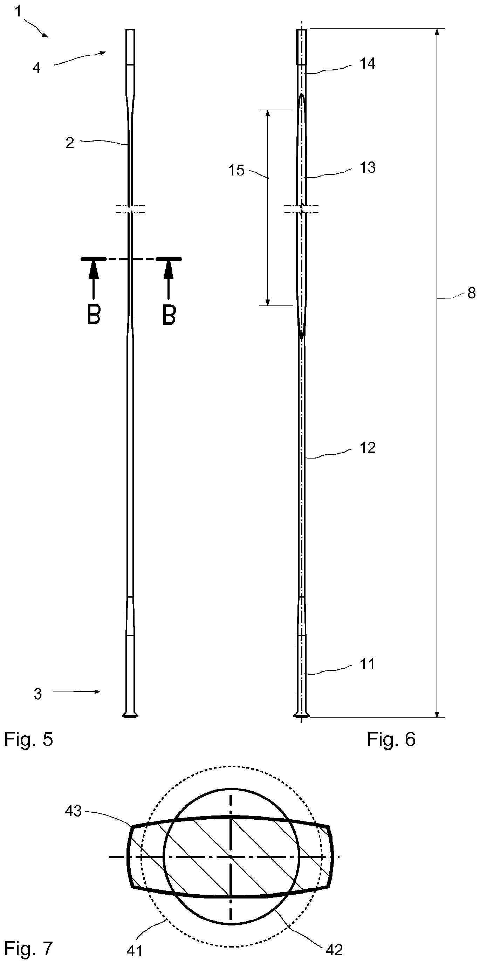

Figur 5 zeigt eine Längsansicht und Figur 6 eine Seitenansicht einer weiteren Speiche 1 in einer etwa maßstäblichen Abbildung, wobei ein Teil der Länge weggeschnitten wurde. Die Länge 15 des zweiten Mittelbereichs 13 mit dem abgeflachten Querschnitt 43 liegt vorzugsweise zwischen etwa 2/3 und etwa 1/3 der Länge 8 eines Speichenkörpers 2. In einem konkreten Ausführungsbeispiel weist der zweite Mittelbereich 15 etwas weniger als die Hälfte der Länge des gesamten Speichenkörpers 2 auf.

Eine Länge 8 der gesamten Speiche 1, also von Endabschnitt 11 bis Endabschnitt 14 hängt vom Anwendungsfall und der Einbausituation ab. In einem konkreten Fall beträgt die Länge 8 des Speichenkörpers 290 mm, kann aber abhängig von Felge und Einbaulage etc. bis zu z. B. 10% oder 20% kürzer oder länger sein. Eine Länge 15 des zweiten Mittelbereichs 13 inklusive der Übergangsbereiche 51 und 52 kann in einem konkreten Fall 152 mm betragen. Die Länge der Übergangsbereiche 51 und 52 ist vorzugsweise jeweils kleiner als 15 mm und kann auch 10 mm oder weniger betragen, sodass eine Länge des zweiten Mittelbereichs bei etwa 130 mm +/- 10 mm liegen kann.

Figur 7 zeigt einen schematischen Querschnitt durch die Speiche 1 aus Figuren 5 und 6, wobei der Querschnitt 43 in dem zweiten Mittelbereich 13 schraffiert eingezeichnet ist. Zusätzlich ist der runde Querschnitt 42 in dem ersten Mittelbereich 12 durchgezogen eingezeichnet. Der zweite Mittelbereich 13 wird durch eine Verprägung oder einen anderen Umformvorgang eines Bereiches erzielt, der ursprünglich einen rund ausgebildeten Querschnitt 42 aufweist. Durch die Verprägung wird das runde Material in die dargestellte abgeflachte Form gebracht. Dabei wird eine abgeflachte Form hergestellt, die z. B. etwa oval, elliptisch oder rechteckig oder flügelformartig ausgebildet sein kann.

Zusätzlich ist noch der Querschnitt 41 aus dem ersten Endabschnitt 11 gestrichelt eingezeichnet. Aus dem ursprünglich in Längsrichtung homogenen Körper wird durch einen Bearbeitungsvorgang oder z. B. einen Ziehvorgang ein Körper hergestellt, der in den Mittelbereichen 12 und 13 einen reduzierten Querschnitt aufweist, während in dem ersten Endabschnitt 11 und dem zweiten Endabschnitt 14 noch der ursprüngliche Durchmesser erhalten bleibt. Anschließend wird in dem zweiten Mittelbereich 13 der Speichenkörper 12 verprägt, sodass sich dort der abgeflachte Querschnitt 43 ergibt.

Dadurch, dass der abgeflachte Querschnitt 43 des zweiten Mittelbereichs 13 bei den Laufrädern 101 und 102 radial weiter außen vorgesehen ist, als der erste Mittelbereich 12 mit einem im Durchmesser reduzierten Querschnitt 42 wird insgesamt eine deutliche Reduktion des Windwiderstandes erzielt, während gleichzeitig im Vergleich zu einem Laufrad mit durchgängig gleich dicken Speichen die Seitenwindempfindlichkeit sogar reduziert werden kann oder gleich bleibt.

### Bezugszeichenliste:

| | | | |
|---|---|---|---|
| 1 | Speiche | 106 | Lenker |
| 2 | Speichenkörper | 107 | Sattel |
| 3 | nabenseitiges, erstes Ende | 108 | Nabe |
| 4 | felgenseitiges, zweites Ende | 109 | Speiche |
| | | 110 | Felge |
| 5 | Längsrichtung | 111 | Bremsscheibe |
| 6 | Längsebene | 112 | Antrieb |
| 7 | Längsabschnitt | 113 | Ausfallende |
| 8 | Länge von 2 | | |
| 9 | Gewinde | | |
| 10 | Speichenkopf | | |
| 11 | erster Endabschnitt | | |
| 12 | erster Mittelbereich | | |
| 13 | zweiter Mittelbereich | | |
| 14 | zweiter Endabschnitt | | |
| 15 | Länge von 13 | | |
| 21 | erste Endabschnittdicke | | |
| 22 | erste Mittelbereichdicke | | |
| 23 | zweite Mittelbereichdicke | | |
| 24 | zweite Endabschnittdicke | | |
| 31 | erste Endabschnittbreite | | |
| 32 | erste Mittelbereichbreite | | |
| 33 | zweite Mittelbereichbreite | | |
| 34 | zweite Endabschnittbreite | | |
| 41 | Querschnitt | | |
| 42 | Querschnitt | | |
| 43 | Querschnitt | | |
| 44 | Querschnitt | | |
| 51 | Übergangsbereich | | |
| 52 | Übergangsbereich | | |
| 53 | Übergangsbereich | | |
| 100 | Zweirad, Fahrrad | | |
| 101 | Laufrad, Vorderrad | | |
| 102 | Laufrad, Hinterrad | | |
| 103 | Rahmen | | |
| 104 | Gabel | | |
| 105 | Dämpfer | | |

## Patentansprüche

1. Speiche (1) mit einem Speichenkörper (2) für ein Laufrad (101, 102) eines wenigstens teilweise muskelbetriebenen Fahrrades (100), insbesondere für ein Laufrad,
wobei der Speichenkörper (2) ein nabenseitiges erstes Ende (3) und ein felgenseitiges zweites Ende (4) aufweist, wobei die beiden Enden (3, 4) voneinander entfernt sind,
und
wobei der Speichenkörper (2) langgestreckt ausgebildet ist und über wenigstens einen Längsbereich (7) in einer Längsrichtung (5) des Speichenkörpers (2) wenigstens einen im Wesentlichen in einer Längsebene (6) aufgenommenen abgeflachten Querschnitt (43) aufweist,
**dadurch gekennzeichnet,**
**dass** der Speichenkörper (2) in einem ersten Endabschnitt (11) an dem nabenseitigen ersten Ende (3) quer zu der Längsebene (6) eine erste Endabschnittdicke (21) aufweist,
und **dass** der Speichenkörper (2) in einem zweiten Endabschnitt (14) an dem felgenseitigen zweiten Ende (4) quer zu der Längsebene (6) eine zweite Endabschnittdicke (24) aufweist, und dass der Speichenkörper (2) in einem näher an dem ersten Endabschnitt (11) als an dem zweiten Endabschnitt (14) angeordneten ersten Mittelbereich (12) quer zu der Längsebene (6) eine erste Mittelbereichdicke (22) aufweist, die kleiner als die erste Endabschnittdicke (21) ist,
und **dass** der Speichenkörper (2) in einem näher an dem zweiten Endabschnitt (14) als an dem ersten Endabschnitt (11) angeordneten zweiten Mittelbereich (13) den abgeflachten Querschnitt (43) aufweist, der eine zweite Mittelbereichdicke (23) quer zu der Längsebene (6) aufweist, die kleiner als die erste Mittelbereichdicke (22) ist.

2. Speiche nach Anspruch 1, wobei der Speichenkörper (2) über wenigstens einen Längsabschnitt (11-14) einen konstanten Querschnitt (41-44) aufweist, wobei der Längsabschnitt (11-14) einer Gruppe von Längsabschnitten entnommen ist, welche den ersten Endabschnitt (11) und den zweiten Endabschnitt (14) und den ersten Mittelbereich (12) und den zweiten Mittelbereich (13) umfasst.

3. Speiche nach einem der vorhergehenden Ansprüche, wobei der Speichenkörper (2) zwischen wenigstens zwei Längsabschnitten (11-14) einen Übergangsbereich (51-53) aufweist, wobei der Übergangsbereich (51-53) kontinuierlich und/oder abgestuft ausgebildet ist, wobei insbesondere ein Übergangsbereich (51-53) kürzer als als 10% einer Länge des ersten Mittelbereiches (12) ist.

4. Speiche nach einem der vorhergehenden Ansprüche, wobei der Speichenkörper (2) quer zu seiner Längsrichtung (5) und innerhalb der Längsebene (6) in dem ersten Mittelbereich (12) eine erste Mittelbereichbreite (32) aufweist, die geringer als die zweite Mittelbereichbreite (33) in dem zweiten Mittelbereich (13) ist.

5. Speiche nach einem der vorhergehenden Ansprüche, wobei die zweite Mittelbereichbreite (33) größer ist als eine erste Endabschnittbreite (31) in dem ersten Endabschnitt (11) und/oder größer ist als eine zweite Endabschnittbreite (34) in dem zweiten Endabschnitt (14).

6. Speiche nach einem der vorhergehenden Ansprüche, wobei der erste Endabschnitt (11) und der zweite Endabschnitt (14) und der erste Mittelbereich (12) gleichartig ausgebildete Querschnitte (41, 42, 44) aufweisen.

7. Speiche nach Anspruch 5, wobei der erste Endabschnitt (11) und der zweite Endabschnitt (14) gleiche Querschnitte (41, 44) aufweisen.

8. Speiche nach einem der vorhergehenden Ansprüche, wobei die Querschnitte (41, 44) in dem ersten Endbereich (11) und dem zweiten Endbereich (14) jeweils rund ausgebildet sind.

9. Speiche nach einem der vorhergehenden Ansprüche, wobei der Querschnitt (42) in dem ersten Mittelbereich (12) rund ausgebildet ist.

10. Speiche nach einem der vorhergehenden Ansprüche, wobei der abgeflachte Querschnitt (43) in dem zweiten Mittelbereich (13) oval und/oder eckig und/oder elliptisch und/oder flügelformartig mit abgerundeten Ecken ausgebildet ist.

11. Speiche nach einem der vorhergehenden Ansprüche, wobei sich der zweite Mittelbereich (13) über eine Länge (15) zwischen 1/3 und 2/3 einer Länge (8) des Speichenkörpers (2) erstreckt.

12. Speiche nach einem der vorhergehenden Ansprüche, wobei der Speichenkörper (2) an dem felgenseitigen Ende (4) ein Außengewinde (9) aufweist und/oder wobei der Speichenkörper an dem nabenseitigen Ende (3) einen Speichenkopf (10) aufweist.

13. Speiche nach einem der vorhergehenden Ansprüche, wobei der Speichenkopf (10) T-förmig ausgebildet ist.

14. Laufrad (101, 102) eines wenigstens teilweise muskelbetriebenen Fahrrades (100), mit einer Nabe (108) und einer Felge (110), wobei die Nabe (108) mit der Felge (110) über eine Vielzahl von Speichen (1) verbunden ist, wobei wenigstens eine der Speichen (1) eine Speiche nach einem der vorhergehenden Ansprüche ist.

## Claims

1. Spoke (1) comprising a spoke body (2) for a wheel (101, 102) of an at least partially muscle-powered bicycle (100), in particular for a wheel,
wherein the spoke body (2) comprises a hub-side, first end (3) and a rim-side, second end (4), wherein the two ends (3, 4) are remote from one another,
and
wherein the spoke body (2) is configured elongated and comprises, over at least one longitudinal region (7) in a longitudinal direction (5) of the spoke body (2), at least one flattened cross-section (43) substantially accommodated in a longitudinal plane (6),
**characterized in**
**that** the spoke body (2) comprises a first end portion thickness (21) in a first end portion (11) at the hub-side, first end (3) transverse to the longitudinal plane (6),
and **that** the spoke body (2) comprises a second end portion thickness (24) in a second end portion (14) at the rim-side, second end (4) transverse to the longitudinal plane (6),
and **that** the spoke body (2) comprises, in a first center region (12) disposed closer to the first end portion (11) than to the second end portion (14), transverse to the longitudinal plane (6), a first center region thickness (22) that is smaller than the first end portion thickness (21),
and **that** the spoke body (2) comprises in a second center region (13) disposed closer to the second end portion (14) than to the first end portion (11), the flattened cross-section (43), comprising a second center region thickness (23) transverse to the longitudinal plane (6) that is smaller than the first center region thickness (22).

2. The spoke according to claim 1, wherein the spoke body (2) comprises, over at least a longitudinal section (11-14), a constant cross-section (41-44), wherein the longitudinal section (11-14) is taken from a group of longitudinal sections comprising the first end portion (11) and the second end portion (14), and the first center region (12) and the second center region (13).

3. The spoke according to any of the preceding claims, wherein the spoke body (2) comprises, between at least two longitudinal sections (11-14), a transition region (51-53), wherein the transition region (51-53) is configured continuously and/or stepped, wherein in particular a transition region (51-53) is shorter than 10% of the length of the first center region (12).

4. The spoke according to any of the preceding claims, wherein the spoke body (2) has, transverse to its longitudinal direction (5) and within the longitudinal plane (6) in the first center region (12), a first center region width (32) which is smaller than the second center region width (33) in the second center region (13).

5. The spoke according to any of the preceding claims, wherein the second center region width (33) is larger than the first end portion width (31) in the first end portion (11), and/or larger than the second end portion width (34) in the second end portion (14).

6. The spoke according to any of the preceding claims, wherein the first end portion (11) and the second end portion (14) and the first center region (12), comprise cross-sections (41, 42, 44) similar in configuration.

7. The spoke according to claim 5, wherein the first end portion (11) and the second end portion (14) comprise equal cross-sections (41, 44).

8. The spoke according to any of the preceding claims, wherein the cross-sections (41, 44) in the first end region (11) and the second end region (14) are configured round.

9. The spoke according to any of the preceding claims, wherein the cross-section (42) in the first center region (12) is configured round.

10. The spoke according to any of the preceding claims, wherein the flattened cross-section (43) in the second center region (13) is configured oval and/or angular and/or elliptic and/or wing-shaped with rounded corners.

11. The spoke according to any of the preceding claims, wherein the second center region (13) extends over a length (15) between 1/3 and 2/3 of the length (8) of the spoke body (2).

12. The spoke according to any of the preceding claims, wherein the spoke body (2) comprises an external thread (9) at the rim-side end (4), and/or wherein the spoke body comprises a spoke head (10) at the hub-side end (3).

13. The spoke according to any of the preceding claims, wherein the spoke head (10) is configured T-shaped.

14. Wheel (101, 102) of an at least partially muscle-powered bicycle (100), comprising a hub (108) and a rim (110), wherein the hub (108) is connected with the rim (110) through a plurality of spokes (1), wherein at least one of the spokes (1) is a spoke according to any of the preceding claims.

## Revendications

1. Rayon (1) avec un corps de rayon (2) pour une roue (101, 102) d'une bicyclette (100) entraînée, au moins en partie, par force musculaire, en particulier pour une roue,
dans lequel le corps de rayon (2) présente une première extrémité (3) côté moyeu et une deuxième extrémité (4) côté jante, dans lequel les deux extrémités (3, 4) sont espacées l'une de l'autre,
et
dans lequel le corps de rayon (2) est réalisé de manière allongée et présente, sur au moins une zone longitudinale (7) dans une direction longitudinale (5) du corps de rayon (2), au moins une section transversale aplatie (43) prise pour l'essentiel dans un plan longitudinal (6),
**caractérisé par le fait**
**que** le corps de rayon (2) présente une première épaisseur de section d'extrémité (21) dans une première section d'extrémité (11) à la première extrémité (3) côté moyeu, transversalement au plan longitudinal (6),
et **que** le corps de rayon (2) présente une deuxième épaisseur de section d'extrémité (24) dans une deuxième section d'extrémité (14) à la deuxième extrémité (4) côté jante, transversalement au plan longitudinal (6),
et **que** le corps de rayon (2) présente une première épaisseur de zone centrale (22) dans une première zone centrale (12) disposée plus près de la première section d'extrémité (11) que de la deuxième section d'extrémité (14), transversalement au plan longitudinal (6), qui est inférieure à ladite première épaisseur de section d'extrémité (21),
et **que** le corps de rayon (2) présente la section transversale aplatie (43) dans une deuxième zone centrale (13) disposée plus près de la deuxième section d'extrémité (14) que de la première section d'extrémité (11), qui présente une deuxième épaisseur de zone centrale (23) transversalement au plan longitudinal (6) laquelle est inférieure à la première épaisseur de zone centrale (22).

2. Rayon selon la revendication 1, dans lequel le corps de rayon (2) présente une section transversale constante (41-44) sur au moins une section longitudinale (11-14), dans lequel la section longitudinale (11-14) est prise dans un groupe de sections longitudinales qui comprend la première section d'extrémité (11) et la deuxième section d'extrémité (14) et la première zone centrale (12) et la deuxième zone centrale (13).

3. Rayon selon l'une quelconque des revendications précédentes, dans lequel le corps de rayon (2) présente une zone de transition (51-53) entre au moins deux sections longitudinales (11-14), dans lequel la zone de transition (51-53) est réalisée de façon continue et/ou en gradins, dans lequel en particulier une zone de transition (51-53) est inférieure à 10 % d'une longueur de la première zone centrale (12).

4. Rayon selon l'une quelconque des revendications précédentes, dans lequel le corps de rayon (2) présente une première largeur de zone centrale (32) transversalement à sa direction longitudinale (5) et à l'intérieur du plan longitudinal (6) dans la première zone centrale (12), laquelle est inférieure à la deuxième largeur de zone centrale (33) dans la deuxième zone centrale (13).

5. Rayon selon l'une quelconque des revendications précédentes, dans lequel la deuxième largeur de zone centrale (33) est supérieure à une première largeur de section d'extrémité (31) dans la première section d'extrémité (11) et/ou supérieure à une deuxième largeur de section d'extrémité (34) dans la deuxième section d'extrémité (14).

6. Rayon selon l'une quelconque des revendications précédentes, dans lequel la première section d'extrémité (11) et la deuxième section d'extrémité (14) et la première zone centrale (12) présentent des sections transversales (41, 42, 44) qui sont réalisées de manière similaire.

7. Rayon selon la revendication 5, dans lequel la première section d'extrémité (11) et la deuxième section d'extrémité (14) présentent des sections transversales (41, 44) identiques.

8. Rayon selon l'une quelconque des revendications précédentes, dans lequel les sections transversales (41, 44) dans la première zone d'extrémité (11) et dans la deuxième zone d'extrémité (14) sont réalisées chacune de façon arrondie.

9. Rayon selon l'une quelconque des revendications précédentes, dans lequel la section transversale (42) dans la première zone centrale (12) est réalisée de façon ronde.

10. Rayon selon l'une quelconque des revendications précédentes, dans lequel la section transversale aplatie (43) dans la deuxième zone centrale (13) est réalisée de manière ovale et/ou angulaire et/ou elliptique et/ou de type en forme d'aile à coins arrondis.

11. Rayon selon l'une quelconque des revendications précédentes, dans lequel la deuxième zone centrale (13) s'étend sur une longueur (15) comprise entre 1/3 et 2/3 d'une longueur (8) du corps de rayon (2).

12. Rayon selon l'une quelconque des revendications précédentes, dans lequel le corps de rayon (2) présente un filetage extérieur (9) à l'extrémité (4) côté jante et/ou dans lequel le corps de rayon présente une tête de rayon (10) à l'extrémité (3) côté moyeu.

13. Rayon selon l'une quelconque des revendications précédentes, dans lequel la tête de rayon (10) est réalisée en forme de T.

14. Roue (101, 102) d'une bicyclette (100) entraînée, au moins en partie, par force musculaire, comprenant un moyeu (108) et une jante (110), dans laquelle le moyeu (108) est relié à la jante (110) par l'intermédiaire d'une pluralité de rayons (1), dans lequel au moins l'un des rayons (1) est un rayon selon l'une quelconque des revendications précédentes.
